# EUROPÄISCHE PATENTSCHRIFT

(11) **EP 1 420 712 B1**
(45) Veröffentlichungstag und Bekanntmachung des Hinweises auf die Patenterteilung: **09.04.2008**
(21) Anmeldenummer: 02797574.7
(22) Anmeldetag: 09.08.2002
(51) Int. Cl.: A61C 1/18

(54) **MEDIZINISCHES ODER DENTALMEDIZINISCHES HANDSTÜCK MIT EINEM IN EINEM WÄLZLAGER GELAGERTEN DREHTEIL**
MEDICAL OR DENTAL HANDPIECE WITH A ROTARY PART MOUNTED ON AN ANTIFRICTION BEARING
PIECE A MAIN MEDICALE OU DENTAIRE COMPRENANT UNE PARTIE ROTATIVE LOGEE DANS UN PALIER A ROULEMENT

(30) Priorität: 28.08.2001 EP 01120523; 28.02.2002 DE 10208692
(43) Veröffentlichungstag der Anmeldung: 26.05.2004
(73) Patentinhaber: Kaltenbach & Voigt GmbH, 88400 Biberach / Riss (DE)
(72) Erfinder: KUHN, Bernhard, 88400 Biberach (DE)
(74) Vertreter: Schmidt-Evers, Jürgen
(86) Internationale Anmeldenummer: PCT/EP2002/008933
(87) Internationale Veröffentlichungsnummer: WO 2003/020150

(56) Entgegenhaltungen:
- WO-A-02/22039
- CH-A- 690 226
- FR-A- 1 316 974

## Beschreibung

Die Erfindung betrifft ein medizinisches oder dentalmedizinisches Handstück nach dem Oberbegriff des Anspruches 1.

Ein medizinisches oder dentalmedizinisches Handstück ist ein Gegenstand, der zur Bearbeitung des menschlichen Körpers bzw. natürlichen oder künstlichen Teilen davon, wie Prothesen, mit einem Werkzeug eingesetzt wird. Das Werkzeug ist in den meisten Ausgestaltungsfällen ein spanabhebendes Werkzeug, das bei einer Rotationsbewegung oder bei einer hin- und hergehenden Bewegung auf den Körper einwirkt. Als Antrieb dient ein Rotationsmotor, der im Handstück selbst oder in einem sog. Anschlussteil angeordnet sein kann, mit dem das Handstück durch eine Steckkupplung, insbesondere eine Steck/Dreh-Kupplung mit einer Kupplungsausnehmung an dem einen Teil und einen in die Kupplungsausnehmung einfassenden Kupplungszapfen an dem anderen Teil lösbar verbunden ist. Auch beim Vorhandensein eines hin- und hergehenden Werkzeugantriebs wird die Antriebsbewegung von einer Drehbewegung abgeleitet, die wenigstens ein Drehteil ausführt und hierzu im Innenring eines den Innenring und einen Außenring aufweisenden Wälzlagers drehbar gelagert ist. Zur axialen Positionierung des Innenrings und/oder des Außenrings eines Wälzlagers ist es üblich, Schulterflächen vorzusehen, an denen der betreffende Wälzlagerring anliegt und somit gegen eine axiale Bewegung begrenzt ist.

Es ist außerdem bekannt zur axialen Abdichtung des Spaltes zwischen einem Außenring und einer ihn umgebenden Lagerbuchse einen Dichtring aus elastischem Material vorzusehen, der in einer Innenringnut in der Innenmantelfläche der Lagerbuchse sitzt und elastisch gegen die Außenmantelfläche des Außenringes drückt. Eine solche Ausgestaltung ist z.B. aus der WO 01/01879 A1 zu entnehmen. Es handelt sich hierbei auch um die eingangs angegebene gattungsgemäße Bauart eines vorliegenden Handstücks. Die Anordnung von Schulterflächen zur axialen Begrenzung eines Außenrings und/oder Innenrings des Wälzlagers erschwert die Konstruktion eines vorliegenden Handstücks, da wegen der wenigstens einen Schulterfläche jeweils eine besondere Ein- und Ausbaurichtung für das Wälzlager vorbestimmt ist.

Das Dokument CH 690226 offenbart ein Handstück nach dem Oberbegriff des Anspruchs 1.

Der Erfindung liegt die Aufgabe zugrunde, ein medizinisches oder dentalmedizinisches Handstück der eingangs angegebenen Art hinsichtlich der axialen Begrenzung seines Wälzlagers bzw. dessen Außen- und/oder Innenringes, zu verbessern.

Diese Aufgabe wird durch die Merkmale des Anspruches 1 gelöst. Vorteilhafte Weiterbildungen der Erfindung sind in zugehörigen Unteransprüchen beschrieben.

Aufgrund des formschlüssigen Zusammenwirkens des Sicherungsringes mit der Schulterfläche setzt der Ring einer axialen Bewegung des betreffenden Wälzlagers einen Widerstand entgegen, der die axiale Sicherung bzw. Positionierung des betreffenden Wälzlagerrings gewährleistet. Da beide Ringe des Wälzlagers durch die Wälzkörper gegen eine axiale Verschiebung in formschlüssigen Eingriff stehen, gilt die axiale Sicherung bzw. Positionierung über den betreffenden Wälzlagerring hinaus für das gesamte Wälzlager.

Als Sicherungsring eignet sich vorzüglich ein solcher kreisrunden Querschnitts, für den sich in der Fachsprache der Begriff O-Ring etabliert hat. Bei einem solchen Sicherungsring ist die dem jeweiligen Wälzlagerring zugewandte Seite konvex gerundet. Dies ist beim Montieren des betreffenden Wälzlagerrings günstig, weil der Sicherungsring von Natur aus mit seinen gerundeten Flanken Einführungsflächen bildet, die gewährleisten, dass beim Montieren des betreffenden Wälzlagerrings diese Einführungsflächen ein selbsttätiges Wegdrücken des im Wege stehenden Ringabschnitts des Sicherungsringes gewährleisten, wobei in der Montageendstellung der Sicherungsring aufgrund seiner Elastizität selbsttätig in die zweite Ringnut. Es können weitere Einführungsflächen an den Enden des betreffenden Wälzlagerringes oder auch an den Rändern der Lagerbuchse vorgesehen sein. Bei einer solchen Ausgestaltung ist ein selbsttätiges Wegdrücken des überstehenden Ringabschnitts auch bei einem beträchtlichen radialen Vorsprung des Sicherungsringes im entspannten Zustand möglich.

An eine axiale Sicherung bzw. Positionierung des Wälzlagers sind unterschiedliche Anforderungen gestellt. In vielen Anwendungsfällen kann die Anordnung so sein, dass lediglich eine axiale Sicherung dahingehend vorhanden ist, dass der betreffende Wälzlagerring unverlierbar axial gehalten ist. Die erfindungsgemäße elastische Abstützung des Sicherungsringes an der betreffenden Schulterfläche ermöglicht jedoch auch eine definierte axiale Positionierung des betreffenden Wälzlagerringes, wobei aufgrund des elastisch komprimierbaren Materials des Sicherungsringes zwar keine großen axialen Kräfte aufgenommen werden können, jedoch ist dies in vielen Lagerungsfällen auch nicht erforderlich. Wenn eine axiale Positionierung des betreffenden Wälzlagerringes gewünscht ist, ist es vorteilhaft, für diesen eine einseitige Stützschulter vorzusehen und die Ringnut im Wälzlagerring bezüglich des Sicherungsringes zur der Schulterfläche abgewandten Achsrichtung hin soweit zu versetzen, dass der Sicherungsring exzentrisch in die Ringnut des Wälzlagerringes einfasst und hierdurch eine elastische Axialkraft auf den Wälzlagerring ausübt, die den Wälzlagerring gegen die Schulterfläche beaufschlagt bzw. ihn in Anlage mit der Schulterfläche hält.

Der erfindungsgemäße formschlüssige Eingriff des Sicherungsringes in die zweite Ringnut ermöglicht auch eine radial elastische Lagerung. Für diesen Fall ist zwischen dem Wälzlagerring und der Lagerbuchse bzw. dem Lagerzapfen ein radialer Abstand vorzusehen, in dessen Bereich eine radiale Bewegung aufgrund der Elastizität des Sicherungsringes gewährleistet ist.

Weitere Unteranspruchsmerkmale ermöglichen eine einfache, kleine und kostengünstig herstellbare Bauweise, die sich insbesondere für die beengten Raumverhältnisse in einem vorliegenden Handstück eignet. Außerdem wir eine einfache Montage bzw. Demontage ermöglicht.

Nachfolgend werden vorteilhafte Ausgestaltungen der Erfindung anhand von Ausführungsbeispielen und Zeichnungen näher erläutert.

Es zeigt:
- Fig. 1: ein erfindungsgemäßes Handstück in der Seitenansicht, das mit einem sog. Anschlussteil ein Behandlungsinstrument bildet;
- Fig. 2: den Kopf des Handstücks im axialen Schnitt;
- Fig. 3: den Kopf des Handstücks in abgewandelter Ausgestaltung im axialen Schnitt;
- Fig. 4: den Kopf des Handstücks in weiter abgewandelter Ausgestaltung im axialen Schnitt;
- Fig. 5: ein Handstück in weiter abgewandelter Ausgestaltung im axialen Schnitt;
- Fig. 6: den mit Y gekennzeichneten mittleren Bereich des Handstücks nach Fig. 5 im vergrößerten axialen Schnitt.

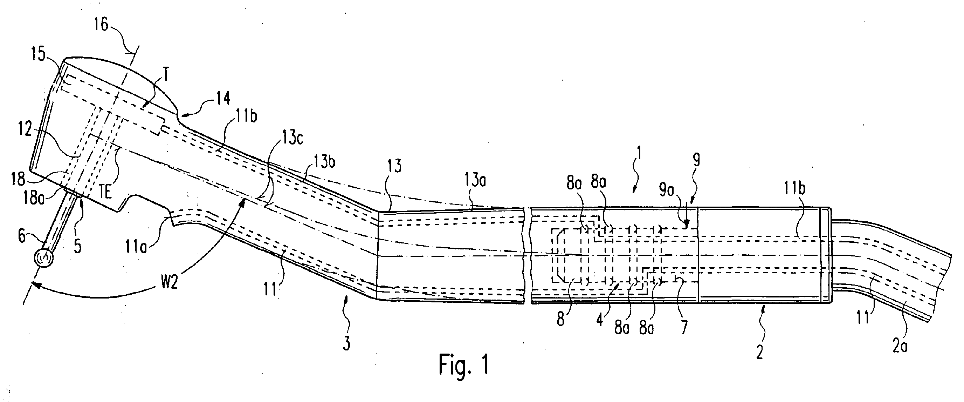

Das in Fig. 1 in seiner Gesamtheit mit 1 bezeichnete Behandlungsinstrument besteht aus einem hinteren Instrumententeil, nämlich einem sogenannten Anschlussteil 2, und einem vorderen Instrumententeil, nämlich dem sogenannten Handstück 3, die durch eine Kupplung 4 insbesondere eine Steckkupplung, vorzugsweise eine Steck/Dreh-Kupplung, lösbar miteinander verbunden sind. Beim vorliegenden Ausführungsbeispiel ist am vorderen Ende des Behandlungsinstruments 1 eine Haltevorrichtung 5 für ein Werkzeug 6 angeordnet, wobei das Werkzeug 6 seitlich oder nach vorne abstehen kann. Das Handstück 3 kann sich gerade (nicht dargestellt) oder zur dem Werkzeug 6 abgewandten Seite hin gekrümmt (strichpunktiert angedeutet) oder winkelförmig erstrecken. Die Steck/Dreh-Kupplung wird durch eine im Querschnitt runde Kupplungsausnehmung 7 und einen darin mit geringem Bewegungsspiel einsteckbaren Kupplungszapfen 8 gebildet. Beim vorliegenden Ausführungsbeispiel ist die Kupplungsausnehmung 7 am hinteren Ende des Handstücks 3 angeordnet, und der im wesentlichen zylindrische Kupplungszapfen 8 erstreckt sich vom Anschlussteil 2 nach vorne. Im gekuppelten Zustand sind die Kupplungsausnehmung 7 und der Kupplungszapfen 8 durch eine Verrastungsvorrichtung 9 lösbar miteinander verrastet. Diese weist ein Verrastungselement 9a auf, das in dem einen Kupplungsteil radial beweglich gelagert und durch eine Federkraft in eine die Teilungsfuge durchsetzende Verrastungsstellung vorgespannt ist, in der das Verrastungselement 9a in eine Ringnut im anderen Kupplungsteil einfasst. Eine solche Verrastungsvorrichtung 9 ist durch eine beim Kuppeln selbsttätig verrastet und beim Entkuppeln manuelle axiale Zugkraftausübung überdrückbar, wobei das Verrastungselement 9a selbsttätig in seine Freigabestellung verdrängt wird.

Das Anschlussteil 2 ist mit einer flexiblen Versorgungsleitung 2a verbunden, die mit einem nicht dargestellten Steuergerät verbunden ist. Das Handstück 3 ist vorzugsweise auf dem Kupplungszapfen 8 frei drehbar gelagert, wodurch die Handhabbarkeit verbessert wird. Durch die Steck/Dreh-Kupplung 4 erstreckt sich wenigstens eine Medienleitung 11 für ein Behandlungs- oder Antriebsmedium, z. B. Wasser, Druckluft oder ein Wasser/Luft-Gemisch (Spray). Die Medienleitung 11 kann sich axial durch eine radiale Teilungsfuge (nicht dargestellt) oder Z-förmig durch eine hohlzylindrische Teilungsfuge zwischen der Kupplungsausnehmung 7 und dem Kupplungszapfen 8 erstrecken, wobei die Medienleitung 11 die Teilungsfuge im Bereich einer Ringnut im Kupplungszapfen 8 oder in der Kupplungsausnehmung 7 durchsetzt, so dass in jeder Drehstellung der Mediendurchgang gewährleistet ist. Beiderseits vom Durchgang ist die Teilungsfuge durch einen Dichtring 8a abgedichtet, der in einer Ringnut in der Wandung der Kupplungsausnehmung 7 oder in der Mantelfläche des Kupplungszapfens 8 angeordnet sein kann. Hierdurch ist eine freie Drehbarkeit um 360 ° und mehr gewährleistet. Die Medienleitung 11 erstreckt sich vom hinteren Ende des Behandlungsinstruments 1 zu dessen vorderem Endbereich, wobei sie teilweise als Kanal im Instrumentenkörper oder als Schlauch- bzw. Rohrleitung verlaufen kann. Die Medienleitung 11 mündet im vorderen Endbereich des Behandlungsinstruments 1 aus diesem aus, wobei diese Mündungsöffnung 11a auf die Behandlungsstelle bzw. auf die Spitze des Werkzeugs 6 gerichtet ist.

Bei allen Ausführungsbeispielen der Erfindung, bei denen gleiche oder vergleichbare Teile mit gleichen Bezugszeichen versehen sind, weist das Handstück 3 ein darin in einem Wälzlager drehbar gelagertes Drehteil 12 auf. Beim Ausführungsbeispiel nach Fig. 1 handelt es sich um ein sogenanntes Turbinenhandstück mit einem bogenförmige gekrümmten oder abgewinkelten Schaft 13. Dieser kann einstückig ausgebildet sein oder aus einem hinteren oder vorderen Schaftabschnitt 13a, 13b bestehen, die am Beginn des Bogens oder an der Scheitelstelle des Winkels fest miteinander verbunden sind. Am vorderen Ende des Schaftes 13 befindet sich ein verdickter Kopf 14, in dem eine Turbine T angeordnet ist mit einem Turbinenrad 15, das um eine sich quer zum Schaft 13 bzw. zu seiner Längsmittelachse 13c und in der Winkel- oder Bodenebene des Schaftes 13 erstreckende Drehachse 16 drehbar im Kopf 14 gelagert ist. Das Turbinenrad 15 befindet sich in einer Turbinenkammer 17, in die eine Medienleitung 11b für Druckluft mündet und auf die Schaufeln des Turbinenrades 15 gerichtet ist. Die Medienleitung 11b durchsetzt die Steck/Drehkupplung 4 ebenfalls Z-förmig. Das Turbinenrad 15 ist mit der Haltevorrichtung 5 verbunden, hier mit einer Aufnahmehülse 18, in die das Werkzeug 6 mit seinem Schaft einsteckbar und in an sich bekannter Weise durch eine Fixiervorrichtung lösbar fixierbar ist.

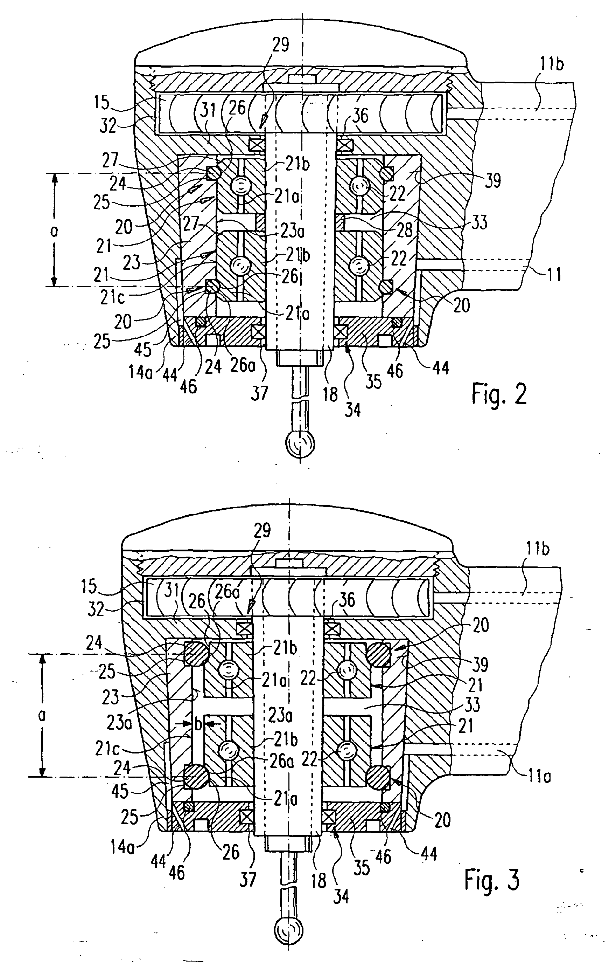

Das Turbinenrad 15 und die Aufnahmehülse 18 können einteilig ausgebildet sein. Beim Ausführungsbeispiel nach Fig. 1 ist das Turbinenrad 15 in dem der Stecköffnung 18a abgewandten Endbereich der Aufnahmehülse 18 mit dieser verbunden. Zur Drehlagerung des aus dem Turbinenrad 15 und der Aufnahmehülse 18 bestehenden Turbinenrotors 15a ist ein oder sind zwei nebeneinander angeordnete Wälzlager 21 (Fig. 2) mit einem Außenring 21a und einem Innenring 21b sowie dazwischen angeordneten Wälzkörpern, insbesondere Kugeln, vorgesehen, mit denen der Turbinenrotor 15a in einer im Gehäuse des Kopfes 14 angeordneten Lagerbuchse 23 um die Drehachse 16 drehbar gelagert ist. Zur axialen Sicherung bzw. Positionierung ist jedem Wälzlager 21 in der Lagerbuchse 23 eine Sicherungsvorrichtung 20 mit einem Sicherungsring 24 aus elastisch verformbaren bzw. elastisch komprimierbarem Material zugeordnet, der in einer Ringnut 25 in der Innenmantelfläche 23a der Lagerbuchse 23 so tief angeordnet ist, dass er die Innenmantelfläche 23a überragt und somit einen Sicherungswulst bildet, mit dem er in einer der Ringnut 25 radial gegenüberliegenden Ringnut 26 in der Außenmantelfläche 21c des Wälzlageraußenringes 21a sitzt. Vorzugsweise drückt der Sicherungsring 24 mit einer z.B. kleinen elastischen Vorspannung radial einwärts gegen den Grund der Ringnut 26. Dies kann dadurch erreicht werden, dass der Innendurchmesser des Sicherungsringes 24 kleiner ist als der Innendurchmesser der Ringnut 26 und/oder dadurch, dass die halbe Differenz zwischen dem Innendurchmesser der Ringnut 26 und dem Außendurchmesser der Ringnut 25 etwas kleiner bemessen ist, als der Durchmesser des im Querschnitt vorzugsweise runden Sicherungsringes 24. In beiden Fällen ist der Sicherungsring 24 radial nach innen gegen den Grund der Ringnut 26 elastisch vorgespannt. Zur Verbesserung der axialen Positionierung ist es auch vorteilhaft, wenn die axiale Breite der Ringnuten 25,26 etwas kleiner ist als die axiale Abmessung des Sicherungsringes 24, so dass dieser zwischen den Seitenwänden bzw. Flanken 26a der Ringnut 25,26 elastisch komprimiert ist. Beim Ausführungsbeispiel ist die Querschnittsform der Ringnut 25 viereckig und die Querschnittsform der Ringnut 26 kreisbogenabschnittförmig gerundet. Es sind jedoch auch andere Querschnittsformen möglich.

Zur Erleichterung der Montage weisen die Wälzlager 21 wenigstens an einer Stirnseite eine gerundete oder spitzwinklige Einführungsfläche 27 auf, die beim axialen Einschieben des Wälzlagers 21 in die Lagerbuchse 23 den Sicherungsring 24 selbsttätig elastisch verformt und dieser in der Montageposition selbsttätig wieder in die Ringnut 26 einfedert. Vorzugsweise ist an beiden Stirnseiten eine Einführungsfläche 27 vorgesehen.

Es ist im weiteren vorteilhaft, die Ringnut 26 bezüglich den Laufrillen der Wälzkörper 22 axial versetzt anzuordnen, wodurch die Materialschwächung des Wälzlageraußenrings 21a von geringerer oder ohne Auswirkung ist. Vorzugsweise sind die Wälzlager 21 gleich ausgebildet, so dass ein Wälzlager 21 wahlweise an der einen oder an der anderen Lagerstelle passt, z.B. in einer um 180° verdrehten Position.

Beim Ausführungsbeispiel sind somit zwei Ringnuten 25 jeweils mit einem Sicherungsring 24 in der Lagerbuchse 23 angeordnet, deren axialer Mittelabstand a voneinander größer ist als die axiale Breite eines Wälzlagers 21, wobei die Ringnuten 26 in den einander abgewandten Endbereichen der Wälzlager 21 angeordnet sind. Sie können aber auch bezüglich der Wälzlager 21 mittig oder nach innen versetzt oder in beiden Wälzlagern 21 in einer axialen Richtung versetzt angeordnet sein. Beim Ausführungsbeispiel ist zwischen den Wälzlagern 21 ein axialer Abstand vorhanden, der durch einen Distanzring 28 gesichert sein kann.

Falls eine axiale Sicherung der Wälzlager 21 nur in einer axialen Richtung gewünscht ist, kann die Ringnut 26 nach einer Seite axial auslaufend ausgebildet sein, wie es das noch zu beschreibende Ausführungsbeispiel nach Fig. 3 an sich zeigt. Bei jener Ausgestaltung sind die einander zugewandten Flanken 26a der Ringnut 26 an den axialen Abstand der vorhandenen Sicherungsringe 24 angepasst und zwar vorzugsweise so, dass die Sicherungsringe 24 mit einer elastischen Spannung bzw. Kompression gegen die vorzugsweise konvergenten Flanken 26a drücken.

Das Ausführungsbeispiel nach Fig. 3, bei dem gleiche oder vergleichbare Teile mit gleichen Bezugszeichen versehen sind, unterscheidet sich vom Ausführungsbeispiel nach Fig. 2 dadurch, dass die Wälzlageraußenringe 21a nicht mit einer üblichen Wälzlagerpassung in der Laufbuchse 23 etwa schließend aufgenommen sind, sondern einen radialen Umfangsabstand b von der Innenmantelfläche 23a aufweist. Hierdurch ist aufgrund der Elastizität der Sicherungsringe 24 die Lagerung nicht nur in axialer Richtung sondern auch in radialer Richtung elastisch nachgiebig, so dass der Turbinenrotor 15a entweder axial oder axial und radial elastisch nachgeben kann und somit axial oder auch radial elastisch gedämpft gelagert ist. Ein weiterer Vorteil ist auch hier die vereinfachte Bauweise und Montage bzw. Demontage, bei denen die Sicherungsringe 24 nach einer Verdrängung und Verformung aus ihrer Sicherungsposition sich selbsttätig in ihre Sicherungsposition wieder rückformen und einschnappen, ohne gelöst und wieder gesetzt werden zu müssen, wie es bei üblichen Sicherungsringen aus Metall der Fall ist.

Wie die Fig. 2 und 3 im weiteren erkennen lassen, sind die Wälzlager 21 jeweils in einem axialen Abstand von zugehörigen Bauteilen des Kopfgehäuses angeordnet, so dass die vorbeschriebene axiale Nachgiebigkeit nicht begrenzt ist. Wenn die axiale Nachgiebigkeit nur in einer Achsrichtung gewünscht ist, kann der betreffende Wälzlagerring in der anderen Achsrichtung durch eine Anlagefläche begrenzt sein.

Beim vorliegenden Ausführungsbeispiel, bei dem ein Turbinenantrieb vorgesehen ist, ist eine axial wirksame Ringdichtung 29 zwischen der Aufnahmehülse 18 und einer Trennwand 31 zwischen der Turbinenkammer 32 und dem Innenraum 33 der Laufbuchse 23 vorgesehen. Hierbei kann es sich um einen an sich bekannten Dichtring handeln, der in einer Ringnut der Trennwand 31 aufgenommen ist. Eine entsprechende Ringdichtung 34 kann auch zwischen der Aufnahmehülse 18 und einer Stirnwand 35 des Kopfgehäuses angeordnet sein, die beim Ausführungsbeispiel in die Umfangswand 14a des Kopfgehäuses eingesetzt oder eingeschraubt ist. Die Aufnahmehülse 18 durchsetzt die Trennwand 31 und die Stirnwand 35 in Löcher 36,37 mit einem entsprechenden Bewegungsspiel.

Bei beiden vorbeschriebenen Ausführungsbeispielen sind zwei Wälzlager 21 axial nebeneinander angeordnet. Es ist aber auch möglich, beide Wälzlager 21 durch ein einziges Wälzlager oder ein einziges zweireihiges Wälzlager (nicht dargestellt) zu bilden. Es ist ferner auch möglich, die beiden Wälzlageraußenringe 21a durch einen gemeinsamen Wälzlageraußenring eines zweireihigen Wälzlagers zu bilden, wobei die Wälzlagerinnenringe 21b unverändert zwei nebeneinander angeordnete Ringe sein können. Wenn nur ein Wälzlager oder ein zweireihiges Wälzlager bzw. nur ein Wälzlageraußenring vorhanden ist, bedarf es beim Ausführungsbeispiel nach Fig. 2 nur eines Sicherungsringes 24, um die axiale Sicherung bzw. Positionierung zu erreichen. Dies gilt grundsätzlich auch für die Ausgestaltung nach Fig. 3 mit dem radialen Umfangsabstand d, jedoch ist es in diesem Fall vorteilhaft, beim Vorhandensein nur eines Wälzlagers bzw. nur eines Wälzlageraußenringes eines zweireihigen Wälzlagers zwei einen axialen Abstand voneinander aufweisende Sicherungsringe 24 vorzusehen.

Es ist im weiteren möglich, das oder die Wälzlager 21 direkt in der Umfangswand 14a des Kopfgehäuses zu lagern, die in einem solchen Falle die Lagerbuchse 23 bildet. Bei den vorbeschriebenen Ausfuhrungsbeispielen ist die Lagerbuchse 23 von hohlzylindrischer Form in einem von der Umfangswand 14a begrenzten Aufnahmeloch 39 passend eingesetzt und axial positioniert ist, hier durch die Stirnwand 35.

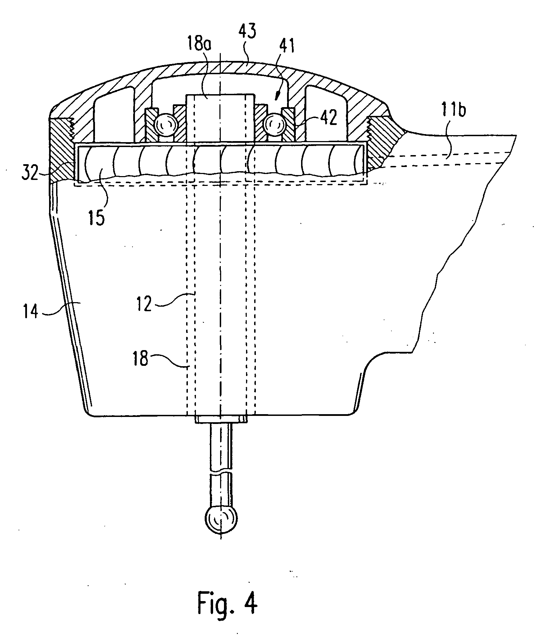

Beim Ausführungsbeispiel nach Fig. 3 ist der Durchmesser des oder der Sicherungsringe 24, z.B. etwa um die Abmessung b, größer bemessen als beim Ausführungsbeispiel nach Fig. 2. Anstelle der vorbeschriebenen bezüglich des Turbinenrades 15 einseitigen Lagerung des Turbinenrotors 15a kann auch eine zweiseitige Lagerung gemäß Fig. 4 vorgesehen sein, wobei es sich bei dem Wälzlager 41, das auf der dem Werkzeug 6 abgewandten Seite des Turbinenrads 15 angeordnet ist, um ein übliches Radiallager und/oder ein Axiallager handeln kann. Beim dargestellten Ausführungsbeispiel gemäß Fig. 4 ist ein Radiallager vorgesehen, das auch geringe axiale Belastungen aufnehmen kann und mit seinem Innenring auf einem auf dieser Seite des Turbinenrads 15 angeordneten Lagerzapfen 18a sitzt und dessen Außenring in einer Lagerbohrung 42 eines vorzugsweise in das Kopfgehäuse einschraubbaren Deckels 43 gelagert ist. Bei abgenommenen Decken 43 lässt sich der Turbinenrotor 15a nach oben aus dem Kopfgehäuse entfernen. Das Drehlager auf der dem Werkzeug 6 zugewandten Seite kann gemäß Fig. 2 oder 3 oder in noch anderer Weise ausgebildet sein.

Die Zuführung des wenigstens einen Behandlungsmediums, z.B Luft oder Wasser oder Spray, kann durch eine oder mehrere auf den Umfang verteilt angeordnete Auslassöffnungen 44 erfolgen, die in der Umfangswand 14a oder in der Stirnwand 35 angeordnet sind. Beim Ausführungsbeispiel ist ein die Lagerbuchse 23 in ihrem werkzeugseitigen Endbereich umgebender Ringkanal 45 in der Umfangswand 14a vorhanden, der sich bis zur Stirnwand 35 erstreckt, wobei mehrere auf dem Umfang verteilt und vorzugsweise konvergent verlaufende Medienkanäle vom Ringkanal 45 ausgehen und die Stirnwand 35 durchsetzen. Die Medienleitung 11 mündet in den Ringkanal 45.

Um in das Eindringen des Mediums in den Lagerraum 33 der Lagerbuchse 23 zu verhindern, kann die zwischen der Umfangswand 14a und der Lagerbuchse 23 angeordnete Fuge und/oder die zwischen der Stirnwand 35 und der Lagerbuchse 23 angeordnete Fuge jeweils durch eine Ringdichtung abgedichtet sein, z.B. durch einen O-Ring 46, der in einer Ringnut sitzt, die in einem der beiden Teile in an sich bekannter Weise angeordnet ist.

Anstelle der Anordnung wenigstens eines Sicherungsringes 24 zwischen der oder den Wälzlageraußenringen 21a und der Innenmantelfläche 23a der Lagerbuchse 23 ist es bei beiden Ausführungsbeispielen gemäß Fig. 2 und 3 möglich, den oder die Sicherungsringe 24 in entsprechender Anordnung zwischen dem oder den Wälzlagerinnenringen 21b und der Aufnahmehülse 18 anzuordnen, wobei wenigstens eine der Ringnut 25 entsprechende Nut in der Außenmantelfläche der Aufnahmehülse 18 angeordnet ist und wenigstens eine Ringnut 26 in der Innenmantelfläche des Wälzlagerinnenrings 21b angeordnet ist.

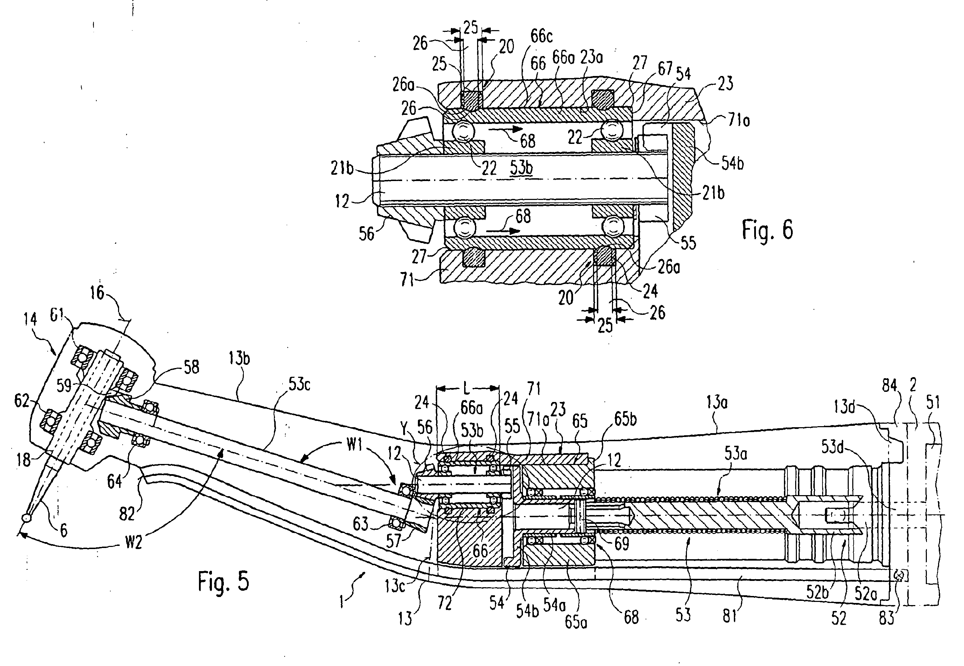

Beim Ausführungsbeispiel nach Fig. 5 und 6, bei dem gleiche oder vergleichbare Teile mit gleichen Bezugszeichen versehen sind, ist die erfindungsgemäße axial und ggf. auch radial elastisch nachgiebige Lagerung im Schaft 13 zur Drehlagerung eines darin drehbar gelagerten Drehteils 12 angeordnet, hier zur Drehlagerung eines Antriebswellenlängsabschnitts. Bei diesem Behandlungsinstrument 1 ist ein Antriebsmotor 51, z.B. ein Elektromotor, im strichpunktiert ergänzten Anschlussteil 2 angeordnet und durch eine Antriebswelle bzw. einen Antriebswellenzug 53 mit mehreren Antriebswellenabschnitten mit der Aufnahmehülse 18 antriebsmäßig verbunden. Im Bereich der Steckkupplung 4 weist der Antriebswellenzug 53 eine Steckkupplung 52 mit zwei formschlüssig miteinander korrespondierenden Steckkupplungselementen 52a, 52b auf, wodurch beim Kuppeln und Entkuppeln der Steckkupplung 4 zugleich ein Kuppeln und Entkuppeln der Steckkupplung 52 möglich ist.

Ein im hinteren Endbereich des Handstücks 3 angeordneter Antriebswellenabschnitt 53a erstreckt sich bis in den Scheitelbereich des abgewinkelten Schaftes 13, wobei sein vorderes Ende durch einen sich im wesentlichen nur im Scheitelbereich axial erstreckenden zweiten Antriebswellenabschnitt 53b antriebsmäßig mit einem dritten Antriebswellenabschnitt 53c verbunden ist, der sich im vorderen Schaftabschnitt 13b bis zur Aufnahmehülse 18 erstreckt und antriebsmäßig mit dieser verbunden ist. Zur Verbindung der Antriebswellenabschnitte 53a, 53b, 53c ist jeweils ein Zahnradgetriebe vorgesehen. Am vorderen Ende des ersten Antriebswellenabschnitts 53a ist ein Zahnrad 54 mit einer Innenverzahnung angeordnet, die mit einem Ritzel 55 am hinteren Ende des zweiten Antriebswellenabschnitts 53b kämmt. Dabei ist der zweite Antriebswellenabschnitt 53b bezüglich dem Scheitel 13c der Abwinklung oder Krümmung zur dem Werkzeug 6 abgewandten Seite hin versetzt angeordnet, wobei am vorderen Ende des zweiten Antriebswellenabschnitts 53b und am hinteren Ende des dritten Antriebswellenabschnitts 53c jeweils ein Ritzel 56, 57 im wesentlichen in einer Querebene bzw. einander überlappend angeordnet sind, im Sinne von Stirn- oder Kegelrädern die miteinander kämmen. Der zweite und der dritte Antriebswellenabschnitt 53b, 53c schließen einen stumpfen Winkel W1 ein, der zur dem Werkzeug 6 abgewandten Seite hin offen ist.

Die Antriebsverbindung zwischen dem dritten Antriebswellenabschnitt 53c und der Aufnahmehülse 18 ist durch ein Winkelzahnradgetriebe mit einem Kegelzahnrad 58 am vorderen Ende des dritten Antriebswellenabschnitts 53c und Kegelzahnrad 59 auf der Aufnahmehülse 18 gebildet. Der Zahneingriff zwischen dem Kegelzahnrädern 58, 59 ist bezüglich des dritten Antriebswellenabschnitts 53c auf dessen dem Werkzeug 6 abgewandten Seite angeordnet. Hierdurch wird die Aufnahmehülse 18 in der gleichen Drehrichtung angetrieben, wie der erste Antriebswellenabschnitt 53a. Die Aufnahmehülse 18 ist mittels zwei Wälzlagern 61, 62 im Kopf 14 drehbar gelagert, die einen längs der Drehachse 16 gerichteten Abstand voneinander aufweisen, der größer ist als das Kegelzahnrad 58, so dass letzteres dazwischen angeordnet werden kann, einschließlich dem Kegelrad 59, das auf der dem Werkzeug 6 abgewandten Seite des Kegelrades 58 und zugleich auf der dem Werkzeug 6 zugewandten Seite des Wälzlagers 61 angeordnet ist, das vom Werkzeug 6 weiter entfernt angeordnet ist als das andere Wälzlager 62. Zur Drehlagerung des zweiten Antriebswellenabschnitts 53c ist jeweils ein Wälzlager 63, 64 auf den Endbereichen dieses Antriebswellenabschnitts 53c angeordnet, deren Außenringe in einem nicht dargestellten Längsloch des Schaftabschnitts 13b sitzen und gelagert sind.

Die Ausgestaltung des Zahnrads 54 als Hohlrad ermöglicht bei radial kleiner Bauweise eine verhältnismäßig große Übersetzung der Drehzahl zwischen dem ersten und dem zweiten Antriebswellenabschnitt 53a, 53b.

Beim Ausführungsbeispiel nach Fig. 5 und 6 sind zur Lagerung des ersten Antriebswellenabschnitts 53a und des zweiten Antriebswellenabschnitts 53b jeweils im Schaft 13 ein zweireihiges Wälzlager 65,66 in einer Lagerbuchse vorgesehen. Dieses Wälzlager 65, 66 reicht jeweils aus, den gesamten Antriebswellenabschnitt 53a bzw. 53b hinreichend stabil zu lagern. Der erste Antriebswellenabschnitt 53a überragt das Wälzlager 65 nach hinten frei abstehend, wodurch eine geringfügige radiale Flexibilität zum Kuppeln mit dem Antriebswellenabschnitt des Anschlussteils 2 vorhanden ist. Zur Vergrößerung der Flexibilität kann zwischen dem ersten Antriebswellenabschnitt 53a und dem Zahnrad 54 eine Gelenkverbindung 68 mit einem Querstift 69 verbunden sein, wodurch die radiale Flexibilität des ersten Antriebswellenabschnitts 53a vergrößert ist. Das Zahnrad 54 besteht aus einem hinteren zylindrischen oder hohlzylindrischen Lagerabschnitt 54a, an dessen vorderem Ende ein Flansch 54b angeordnet ist, der an seiner Vorderseite den Hohlzahnkranz 54 trägt.

Die Wälzlager 65 66 können zwei, z.B. einen axialen Abstand voneinander aufweisende Wälzlagerinnenringe 21b oder auch eine axial durchgehende Wälzlagerinnenhülse (nicht dargestellt) aufweisen.

Bei allen Wälzlagern 65, 66 kann der axiale Abstand der Wälzkörperreihen voneinander vorzugsweise größer bemessen sein, als der mittlere Durchmesser der Wälzkörperlaufrillen. Das Wälzlager 66 ist so lang bemessen, siehe L, daß es zwischen die Ritzel 55, 56 passt, wodurch zugleich eine axiale Begrenzung für den zweiten Antriebswellenabschnitt 52b gebildet ist.

Beide Wälzlager 65, 66 sind vorzugsweise in einem gemeinsamen, eine Lagerbuchse 23 bildenden Tragkörper 71 gelagert, der im der Scheitelstelle benachbarten Bereich des hinteren Schaftabschnitts 13a im Schaft 13 sitzt und durch ein nach hinten oder nach vorne ausmündendes Aufnahmeloch 71a von hinten montierbar und nach hinten wieder demontierbar ist oder umgekehrt sowie im Schaftabschnitt 13a in nicht dargestellter Weise axial fixierbar ist.

Wie sich aus Fig. 5 und 6 im weiteren entnehmen lässt, ist das hintere Wälzlager 65 in das Aufnahmeloch 71a des Tragkörpers 71 von hinten eingeschoben und z. B. durch einen am hinteren Ende der Außenlagerhülse 65a angeordneten Flansch 65b nach vorne hin axial fixiert. Das vordere Wälzlager 66 ist dagegen von vorne in ein Aufnahmeloch 72 des Tragkörpers 71 eingesetzt und im beschriebenen Sinne durch einen oder zwei Sicherungsringe 24 axial fixiert bzw. positioniert. Der das Zahnrad 54 bildende Flansch ist im Aufnahmeloch 71a zwischen dem Wälzlager 65 und dem Grund des Aufnahmelochs 71 mit Bewegungsspiel gelagert.

Beim Ausführungsbeispiel nach Fig. 5 und 6 ist der Außenlagerhülse 66a in ihrer Außenmantelfläche 66c des z.B. einzigen und zweireihigen Wälzlagers 66 wenigstens ein, vorzugsweise zwei einen axialen Abstand voneinander aufweisende Sicherungsringe 24 zugeordnet, wobei dies in der Ausgestaltung nach Fig. 2 oder 3 ausgebildet sein kann. In Fig. 5 und 6 ist lediglich die Ausgestaltung nach Fig. 2 dargestellt. Um Wiederholungen zu vermeiden, wird diesbezüglich auf die Beschreibung der Ausführungsbeispiele nach Fig. 2 und 3 Bezug genommen.

Bei der Ausgestaltung nach Fig. 6 ist jedoch folgende Besonderheit vorgesehen. Zum einen ist der Wälzlageraußenring, hier die gemeinsame Außenlagerhülse 66a, an einem ihrer Enden, hier an ihrem hinteren Ende, an einer Schulter 67 im Tragkörper 71 positioniert, die durch eine Stufenfläche in der die Außenlagerhülse 66a aufnehmenden Bohrung gebildet sein kann. Außerdem ist die wenigstens eine Ringnut 26 bei Anlage der Außenlagerhülse 66a an der Schulter 67 bezüglich der zugehörigen Ringnut 25 zu der der Schulter 67 abgewandten Achsrichtung hin versetzt, was aus Fig. 6 deutlich zu entnehmen ist. Durch diesen Versatz wird der Sicherungsring 24 bezüglich seiner Ringebene unsymmetrisch verformt, wobei er auf aufgrund seiner Elastizität bestrebt ist, seine symmetrische Form einzunehmen. Hierdurch erzeugt der Sicherungsring 24 eine axiale Kraft, siehe Pfeil 68, die die Außenlagerhülse 66a gegen die Schulter 67 elastisch vorspannt und somit deren Anlage an der Schulter 67 gewährleistet.

Ein weiterer Vorteil der Sicherungs- bzw. Positioniervorrichtung 20 besteht darin, dass durch den Sicherungsring 24 eine Ringdichtung zur Abdichtung der Fuge zwischen der Innenmantelfläche 23a und dem Lagerzapfen gebildet wird, und zwar insbesondere dann, wenn der Sicherungsring 24 nicht nur gegen den Grund der Ringnut 26, sondern auch gegen den Grund der Ringnut 25 elastisch vorgespannt ist.

Mit 81 ist ein Lichtleitstab bezeichnet, der in Randnähe der Werkzeugseite des Schaftes 13 in diesem von hinten nach vorne auf das freie Ende des Werkzeug 6 gerichteten Austrittsfenster 82 erstreckt. Im Funktionsbetrieb dieses Handstücks 3 wird Licht von einer Lichtquelle 83 in den Lichtleitstab 81 eingekoppelt, wobei die Lichtquelle 83 auf einem im oder am Anschlussteil 2 drehbar gelagerten Karussell 84 (andeutungsweise dargestellt) angeordnet ist,das durch einen Mitnehmer 13d formschlüssig mit dem Handstück 13 verbunden ist, so dass auch in diesem Falle die freie Drehbarkeit des Handstücks 3 in der Steck/Drehkupplung 4 gewährleistet ist.

Der in Fig. 5 zwischen der Mittelachse des vorderen Schaftabschnitts 13b und der Drehachse 16 der Aufnahmehülse 18 eingeschlossene Winkel W2 beträgt mehr als 90°, vorzugsweise im wesentlichen 100. Eine solche Ausgestaltung ist unter Berücksichtigung der Anatomie im Mundraum eines Patienten besonders günstig. Diese günstige Ausgestaltung mit dem Winkels W2 gleich etwa 100° gilt nicht nur für das mit einem Motor im Anschlussteil 2 betreibbare Handstück 3 gemäß Fig. 5, sondern auch für das Turbinen-Handstück 3 gemäß Fig.1.

Die erfindungsgemäßen Ausgestaltungen eignen sich auch besonders gut für ein Handstück, das nicht winkelförmig geformt ist, wie es in Fig. 1 dargestellt ist, sondern das in seinem vorderen Bereich bogenförmig gekrümmt ist, wobei der Scheitel 13c in der Krümmungsmitte oder am Werkzeug 6 abgewandten Ende der Krümmung angeordnet sein kann.

Der mehr als 90° und vorzugsweise im wesentlichen 100° betragende Winkel W2 erstreckt sich bei der gekrümmten Form des Handstücks 3 zwischen der Mittelachse der Haltevorrichtung 5 und einer Tangentialebene TE, in der die in Fig. 1 strichpunktiert angedeutete gekrümmte Mittelachse 13c des Handstücks 3 die Mittelachse 16 der Haltevorrichtung 5 schneidet.

Der Außenring 65a kann durch eine der Sicherungsvorrichtung 20 gemäß Fig. 6 entsprechende, jedoch um 180° verdrehte Sicherungsvorrichtung gegen eine ungewollte Verschiebung nach hinten gerichtet sein, was in Fig. 5 nicht dargestellt ist.

Die erfindungsgemäße Sicherungsvorrichtung 20 kann auch zwischen dem Innenring 21b und dem Drehteil 12 in den vorbeschriebenen Ausgestaltungen entsprechenden Ausgestaltungen angeordnet sein.

## Patentansprüche

1. Medizinisches oder dentalmedizinisches Handstück (3) mit einem Drehteil (12), das durch mindestens ein Walzlager (21) mit mindestens einem Innenring (21b) und mindestens einem Außenring (21a) drehbar in einer Lagerbuchse (23) gelagert ist,
**dadurch gekennzeichnet,**
**dass** in der Lagerbuchse (23) zwei Wälzlager (21) axial nebeneinander oder ein zweireihiges Wälzlager angeordnet sind und in der Innenmantelfläche (23a) der Lagerbuchse (23) oder in der Außenmantelfläche (21c) des jeweiligen Außenrings (21a) eine erste Ringnut (25) angeordnet ist, in der ein Sicherungsring (24) sitzt, der aus der ersten Ringnut (25) herausragt und wenigstens mit seiner einen Seite an einer Schultertläche (26a) des jeweils radial gegenüberliegenden Teiles anliegt.

2. Handstück nach Anspruch 1,
**dadurch gekennzeichnet,**
**dass** die Schulterfläche (26a) durch eine zweite Ringnut (26) im jeweils radial gegenüberliegenden Teil gebildet ist und der Sicherungsring (24) an beiden Schulterflächen (26a) der zweiten Ringnut (26) anliegt.

3. Handstück nach Anspruch 1 oder 2,
**dadurch gekennzeichnet,**
**dass** der Sicherungsring (24) mit einer elastischen Vorspannung gegen die wenigstens eine Schulterfläche (26a) und vorzugsweise auch gegen die Grundfläche der zweiten Ringnut (26) drückt.

4. Handstück nach einem der vorherigen Ansprüche,
**dadurch gekennzeichnet,**
**dass** die erste Ringnut (25) oder die wenigstens eine Schulterfläche (26a) bezüglich der Laufrille im Außenring (21a; 66a) axial versetzt ist.

5. Handstück nach einem der Ansprüche 2-4,
**dadurch gekennzeichnet,**
**dass** die Querschnittsform der zweiten Ringnut (26) gerundet ist oder konvergente Flanken (26a) aufweist.

6. Handstück nach einem der Ansprüche 2-5,
**dadurch gekennzeichnet,**
**dass** das die zweite Ringnut (26) aufweisende Teil oder der Außenring (21a; 66a) an einer oder an beiden axialen Rändern jeweils eine gerundete oder schräge Einführungsfläche (27) aufweist.

7. Handstück nach einem der Ansprüche 2-6,
**dadurch gekennzeichnet,**
**dass** der Sicherungsring (24) an der Grundfläche der zweiten Ringnut (26) vorzugsweise mit einer elastischen Spannung anliegt und zwischen der Innenmantelfläche (23a) der Lagerbuchse (23) und der Außenmantelfläche (21c) des Außenringes (21a) ein Ringspalt (b) vorgesehen ist.

8. Handstück nach einem der Ansprüche 2-7,
**dadurch gekennzeichnet,**
**dass** der Außenring (66a) axial an einer Begrenzungsfläche (67) anliegt und die zweite Ringnut (26) in der der Begrenzungsfläche (67) abgewandten Achsrichtung axial versetzt ist.

9. Handstück nach einem der vorherigen Ansprüche,
**dadurch gekennzeichnet,**
**dass** das Drehteil (12) eine Werkzeug-Aufnahmehülse (18) oder einen Turbinenrotor bildet.

## Claims

1. Medical or dental-medical handpiece (3) having a rotary part (12) that is rotatably mounted in a bearing sleeve (23) by means of a roller bearing (21) having at least one inner ring (21b) and at least one outer ring (21a),
**characterised in that**,
in the bearing sleeve (23) two roller bearings (21) are arranged axially next to each other or there is arranged a double-row roller bearing and in the inner surface (23a) of the bearing sleeve (23) or in the outer surface (21c) of the outer ring (21a) concerned there is arranged a first ring groove (25), in which there sits a securing ring (24) which projects out of the first ring groove (25) and bears at least with its one side on a shoulder surface (26a) of the radially oppositely lying part concerned.

2. Handpiece according to claim 1,
**characterised in that**,
the shoulder surface (26a) is formed by means of a second ring groove (26) in the the radially oppositely lying part concerned, and the securing ring (24) bears on the two shoulder surfaces (26a) of the second ring groove (26).

3. Handpiece according to claim 1 or 2,
**characterised in that**,
the securing ring (24) presses with an elastic biasing against the at least one shoulder surface (26a) and preferably also against the base surface of the second ring groove (26).

4. Handpiece according to any preceding claim,
**characterised in that**,
the first ring groove (25) or the at least one shoulder surface (26a) is offset axially with respect to the running groove in the outer ring (21a; 66a).

5. Handpiece according to any of claims 2-4,
**characterised in that**,
the cross-sectional form of the second ring groove (26) is rounded or has convergent flanks (26a).

6. Handpiece according to any of claims 2-5,
**characterised in that**,
the part having the second ring groove (26) or the outer ring (21a; 66a) has at one or at both axial edges in each case a rounded or oblique introduction surface (27).

7. Handpiece according to any of claims 2-6,
**characterised in that**,
the securing ring (24) bears on the base surface of the second ring groove (26) preferably with an elastic tension and between the inner surface (23a) of the bearing sleeve (23) and the outer surface (21c) of the outer ring (21a) a ring gap (b) is provided.

8. Handpiece according to any of claims 2-7,
**characterised in that**,
the outer ring (66a) bears axially on a bounding surface (67) and the second ring groove (26) is axially offset in the axial direction away from the bounding surface (67).

9. Handpiece according to any preceding claim,
**characterised in that**,
the rotary part (12) forms a tool receiving sleeve (18) or a turbine rotor.

## Revendications

1. Pièce à main (3) médicale ou médico-dentaire, comportant une partie rotative 12), qui est montée de manière rotative dans un coussinet (23) au moyen d'au moins un palier à roulement (21) avec au moins une bague intérieure (21b) et au moins une bague extérieure (21a),
**caractérisée en ce que** dans le coussinet (23) sont logés deux paliers à roulement (21) l'un à côté de l'autre dans le sens axial ou un palier à roulement à deux rangées, et dans la paroi latérale intérieure (23a) du coussinet (23) ou dans la paroi latérale extérieure (21c) de la bague extérieure (21a) correspondante est ménagée une première rainure annulaire (25), dans laquelle est posé un circlips (24), qui s'avance hors de la première rainure annulaire (25) et prend appui au moins avec un de ses côtés contre une surface d'appui (26a) de la partie respectivement opposée dans le sens radial.

2. Pièce à main selon la revendication 1, **caractérisée en ce que** la surface d'appui (26a) est formée par une deuxième rainure annulaire (26) ménagée dans la partie respectivement opposée dans le sens radial et le circlips (24) est en appui contre les deux surfaces d'appui (26a) de la deuxième rainure annulaire (26).

3. Pièce à main selon la revendication 1 ou 2, **caractérisée en ce que** le circlips (24) pousse avec une précontrainte élastique contre ladite au moins une surface d'appui (26a) et, de préférence, également contre le fond de la deuxième rainure annulaire (26).

4. Pièce à main selon l'une quelconque des revendications précédentes, **caractérisée en ce que** la première rainure annulaire (25) ou ladite au moins une surface d'appui (26a) est décalée dans le sens axial par rapport à la gorge de roulement dans la bague extérieure (21a ; 66a).

5. Pièce à main selon l'une quelconque des revendications 2 à 4, **caractérisée en ce que** la deuxième rainure annulaire (26) a une section de forme arrondie ou comporte des flancs (26a) convergents.

6. Pièce à main selon l'une quelconque des revendications 2 à 5, **caractérisée en ce que** la partie comportant la deuxième rainure annulaire (26) ou la bague extérieure (21a ; 66a) comporte sur un bord axial ou sur les deux bords axiaux respectivement une surface d'introduction (27) arrondie ou oblique.

7. Pièce à main selon l'une quelconque des revendications 2 à 6, **caractérisée en ce que** le circlips (24) est en appui contre le fond de la deuxième rainure annulaire (26), de préférence avec une contrainte élastique, et une fente annulaire (b) est prévue entre la paroi latérale intérieure (23a) du coussinet (23) et la paroi latérale extérieure (21c) de la bague extérieure (21a).

8. Pièce à main selon l'une quelconque des revendications 2 à 7, **caractérisée en ce que** la bague extérieure (66a) est en appui dans le sens axial contre une surface de délimitation (67) et la deuxième rainure annulaire (26) est décalée dans le sens axial dans la direction de l'axe opposée à la surface de délimitation (67).

9. Pièce à main selon l'une quelconque des revendications 2 à 7, **caractérisée en ce que** la partie rotative (12) forme un manchon de réception (18) pour l'outil ou un rotor de turbine.
